# EUROPÄISCHE PATENTSCHRIFT

(11) **EP 0 919 327 B1**
(45) Veröffentlichungstag und Bekanntmachung des Hinweises auf die Patenterteilung: **03.11.2004**
(21) Anmeldenummer: 98810336.2
(22) Anmeldetag: 17.04.1998
(51) Int. Cl.: B24B 3/60, A61C 19/00

(54) **Vorrichtung zum Schärfen von Dentalinstrumenten**
Apparatus for sharpening dental instruments
Dispositif pour aiguiser des instruments dentaires

(30) Priorität: 01.12.1997 EP 97810935
(43) Veröffentlichungstag der Anmeldung: 02.06.1999
(73) Patentinhaber: HAWE NEOS DENTAL Dr. H. V. WEISSENFLUH AG, 6934 Bioggio (CH)
(72) Erfinder: Römhild, Ludwig Dr., 83471 Berchtesgaden (DE)
(74) Vertreter: AMMANN PATENTANWAELTE AG BERN

(56) Entgegenhaltungen:
- EP-A- 0 307 740
- WO-A-92/09403
- DE-A- 4 307 679

## Beschreibung

Die vorliegende Erfindung bezieht sich auf eine Vorrichtung zum Schärfen, Schleifen oder Polieren von Dental-, Parodontal- oder chirurgischen Instrumenten gemäss Oberbegriff des Anspruchs 1 (siehe z.B. DE-A-4307679).

Ein solches Gerät ist beispielsweise in der EP-B-0 307 740 angegeben, wobei ein wesentliches Merkmal dieses Gerätes die Aufhängung der Schleifscheibe auf zwei Träger ist, die in einer Parallelogramm-Verbindung mit vier Gelenken angeordnet sind, und wobei dieser Träger um eine senkrechte Achse drehbar ist. Das zu bearbeitende Instrument wird in eine Spannzange eingespannt, und die Spannzange ist in einem bogenförmigen Arm angeordnet, der mittels zwei Stützen am Sockel des Gerätes abgestützt ist, wobei die Spannzangenhalterung um den Mittelpunkt des Bogens schwenkbar ist, um die zu schärfende Oberfläche auszurichten.

Das gemäss diesem Patent hergestellte Gerät zeichnet sich durch grosse Präzision, einfache Handhabung sowie einen vielfältigen Anwendungsbereich aus und bedeutete gegenüber dem vorbekannten Stand der Technik einen grossen Fortschritt. Ausgehend von diesem Gerät wurde erkannt, dass sowohl die Schleifscheiben-Halterung als auch die Halterung für die Spannzange sowie die Spannzange zum Einspannen des zu schärfenden Instrumentes wesentlich vereinfacht werden können, ohne die für ein exaktes Schärfen notwendige Präzision preiszugeben.

Aus der EP-B-0 513 283 ist eine ähnlich aufgebaute Vorrichtung zum Schärfen, Schleifen und Polieren von Instrumenten bekannt, wobei die Schleifscheibe ebenfalls in einer parallelogrammförmigen Aufhängung beweglich gehalten ist, während die Instrumentenhalterung an zwei Säulen aufgehängt und zwischen den Säulen geradlinig verschiebbar angeordnet ist.

Aus der EP-A-0 306 267 ist eine Vorrichtung zum Schärfen von Dentalinstrumenten bekannt, bei der die Schleifscheibe starr unter einem bestimmten Winkel eingespannt ist und die Instrumentenhalterung über ein Kugelgelenk mit Flügelmuttersicherung schwenkbar und um die eigene Achse drehbar angeordnet ist. Entgegen den vorgehend beschriebenen Anordnungen, worin die Schleifscheibe durch Federdruck an die zu schärfende Fläche des Instrumentes herangeführt wird und um die Fläche, bzw. Spitze des Instrumentes schwenkbar ist, sind sowohl die Schleifscheibe als auch das Instrument während dem Schärfvorgang fest eingespannt, wobei zwischen der Schleifscheibe und dem Instrument eine magnetische Kraft wirkt und die Fläche oder Spitze des Instrumentes innerhalb der Schleifscheibe geschwenkt wird.

Es ist von diesem bekannten Stand der Technik ausgehend Aufgabe der Erfindung, die Spannkopfhalterung des Instrumentes wesentlich zu vereinfachen und somit eine Vereinfachung und Verbilligung der Herstellung zu erzielen, ohne jedoch die zum Schärfen solcher Instrumente notwendige Präzision zu beeinträchtigen. Diese Aufgabe wird mit dem Gerät gemäss dem unabhängigen Patentanspruch 1 gelöst. Weitere Verbesserungen und Vorteile sind in den abhängigen Ansprüchen offenbart.

Die Erfindung wird im folgenden anhand einer Zeichnung von Ausführungsbeispielen näher erläutert:
- Figur 1: zeigt, schematisch und in einer perspektivischen Sicht, die erfindungsgemässe Vorrichtung,
- Figur 2: zeigt die Vorrichtung von Figur 1 in einer anderen Stellung,
- Figur 3: zeigt ein Detail der Vorrichtung von Figur 1,
- Figur 4: zeigt, in perspektivischer Sicht und teilweise geschnitten, die Vorrichtung von Figur 1 mit weiteren Details,
- Figuren 5 und 6: zeigen, im Längsschnitt, eine Spannzangenanordnung der Vorrichtung von Figur 1 in zwei verschiedenen Stellungen,
- Figuren 7 und 8: zeigen eine Ausführungsvariante zur Spannzange von Figur 5,
- Figuren 9 und 10: zeigen eine zweite Ausführungsvariante zur Spannzangen von Figur 5 oder 7,
- Figur 11: zeigt eine Ausführungsvariante zur Spannzange von Figur 9,
- Figur 12: zeigt, in perspektivischer Sicht und teilweise geschnitten, weitere Details der Vorrichtung gemäss Figur 1,
- Figur 13: zeigt, in perspektivischer Sicht und teilweise geschnitten, weitere Details der Vorrichtung gemäss Figur 1, und
- Figuren 14 und 15: zeigen, in einem Längsschnitt, weitere Details der erfindungsgemässen Vorrichtung gemäss Figur 1.

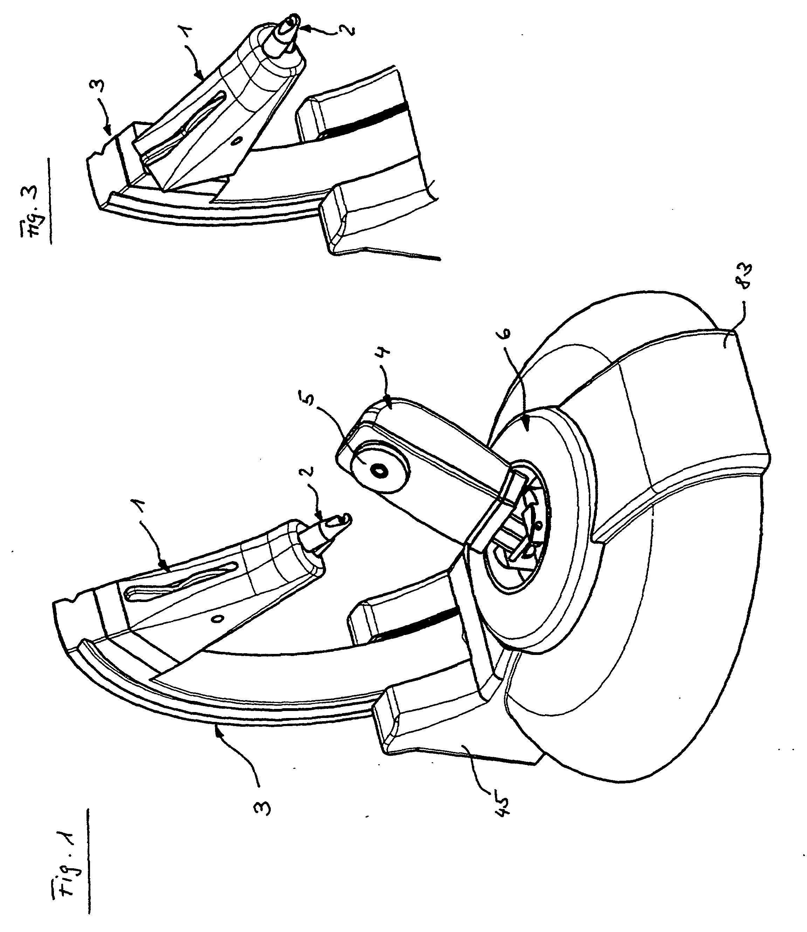

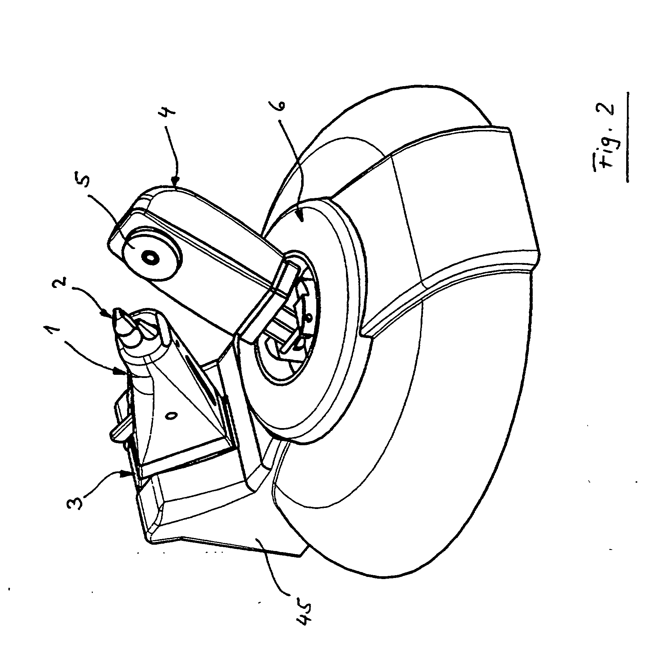

In Figur 1 erkennt man die wesentlichen Elemente der erfindungsgemässen Vorrichtung, den Spannkopf 1 mit der Spannzange 2 zum Einspannen des zu schleifenden Instrumentes, wobei der Spannkopf an einer bogenförmigen Spannkopfhalterung 3 befestigt ist sowie den Schleifkopf 4 mit der Schleifscheibe 5, der am Drehteller 6 schwenkbar befestigt ist. Wie aus den Figuren 1 bis 3 hervorgeht, kann die Spannkopfhalterung 3 aus der waagrechten Stellung gemäss Figur 3 um 30° nach oben und 45° nach unten verschwenkt werden. Es ist selbstverständlich, dass die angegebenen Werte keine Beschränkung darstellen, sondern für die ins Auge gefassten Aufgaben zweckmässig sind.

Figur 3 zeigt ferner, dass der Spannkopf 1 bezüglich der Spannkopfhalterung 3 um seine Mittelachse drehbar ist, wobei die maximale Drehung beispielsweise 20° in jede Richtung beträgt und die verschiedenen Stellungen durch federbeaufschlagte Kugeln einrastbar sind. Diese Drehbewegung ist für das Schleifen von bestimmten Flächen an Instrumenten notwendig, doch kann es für andere Instrumente auch andere Stellungen, bzw. Drehwinkel benötigen.

Die Spannzange ist ein wichtiges Element an einem Schleifgerät, denn sie soll das genaue und feste Einspannen eines Dentalinstrumentes erlauben. Dies auch im Gegensatz zu vielen vorbekannten Schleifgeräten, bei welchen zwar die Schleifscheibe in irgend einer Art eingespannt und ausgerichtet werden kann, jedoch das Dentalinstrument mit der Hand gehalten und geführt wird und eventuell lediglich eine Auflagefläche vorhanden ist. Bei solchen Geräten hängt die Genauigkeit des Schärfens der Schneidfläche im wesentlichen von der Geschicklichkeit des Zahnarztes ab und erlaubt kaum ein reproduzierbares Arbeiten. Es ist daher notwendig, zum Erzielen von reproduzierbaren und genauen Ergebnissen das Instrument in einer genau definierten Position einzuspannen.

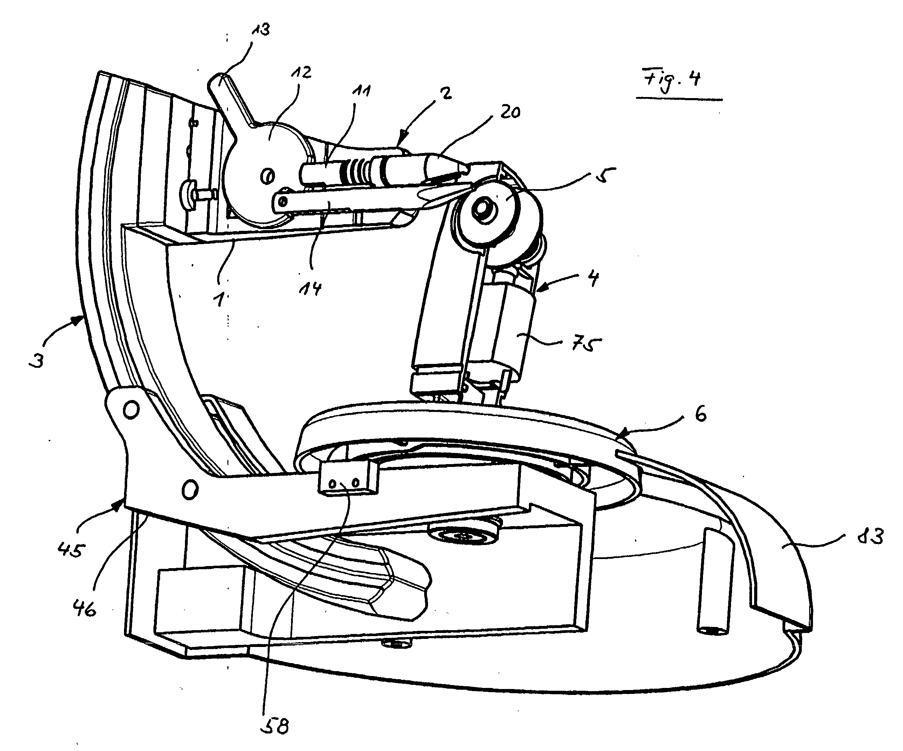

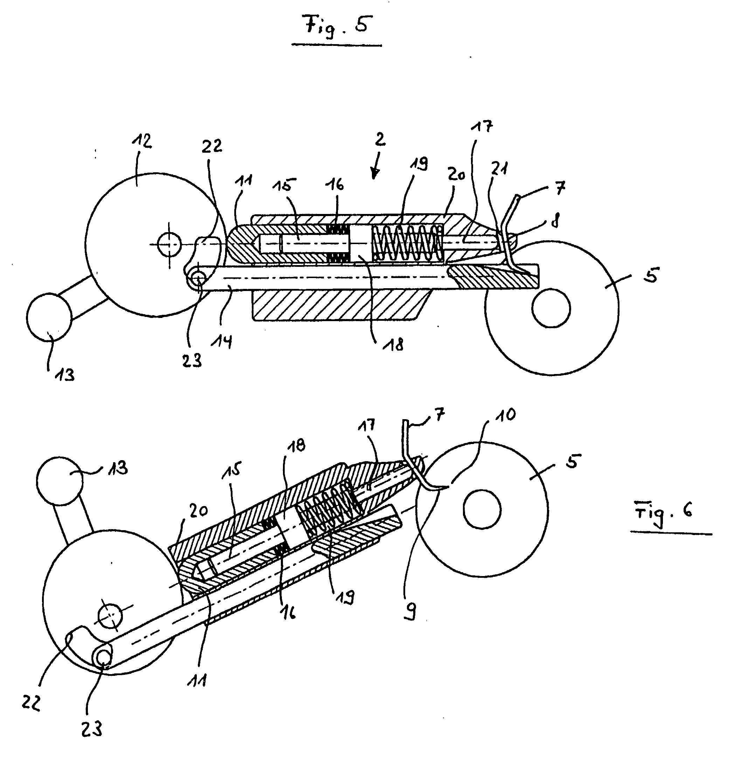

In den Figuren 4 bis 11 sind einige Ausführungsbeispiele einer Spannzangenanordnung dargestellt, die nun näher erläutert werden. Aus den Figuren 5 und 6 kann am besten das Prinzip der erfindungsgemässen Spannzangenanordnung erläutert werden. Darin erkennt man einen Teil eines Dentalinstrumentes, beispielsweise einer Kürette 7, die am ersten Schaft 8 nach der Schneidkante 9 eingespannt ist, wobei die Spitze 10 des Instrumentes in Figur 5 oder 6 nach rechts, d. h. zur Bedienungsperson hin, gerichtet ist.

Die Spannzangenanordnung weist einen in einem Spanngehäuse 20 laufenden Druckbolzen 15 auf, der in der Mitte ein Abstützteil 18 aufweist. Auf der dem eingespannten Instrument entgegengesetzten Seite ist auf dem Druckbolzenteil eine Druckhülse 11 aufgeschoben, die durch ein als Exzenterscheibe 12 ausgebildetes Spannorgan mit Griff 13 betätigt wird. Diese Exzenterscheibe kann auch als Rad oder dergleichen ausgebildet sein. Zwischen der Druckhülse 11 und dem Abstützteil 18 des Druckbolzens befinden sich Tellerfedern 16, während der andere Teil des Druckbolzens, der Spannteil 17 durch eine Druckfeder 19 beaufschlagt wird, die sich am Abstützteil 18 und am Gehäuse-Innern abstützt. Ausserdem befindet sich unterhalb des Druckbolzens ein Positionierbolzen 14, der auch im Spanngehäuse angeordnet ist.

Figur 5 stellt die Einspannposition dar und man erkennt, dass sich in dieser Position der Positionierbolzen 14 in vorgeschobener Stellung befindet und zum Einspannen sich das Dentalinstrument 7 mit dem Rücken der Schneidkante 9 darauf abstützt, um dessen eindeutige Höhenausrichtung zu bewirken. Das Instrument ist in der Spannöffnung 21 im vordersten Teil des Spanngehäuses durchgeschoben, wobei die Spannfläche der Spannöffnung ein Teil der eigentlichen Spannzange bildet.

Bei der Betätigung des Spannorgans von der Stellung in Figur 5 in die Stellung in Figur 6 wird zuerst der Druckbolzen 11 nach vorne geschoben, wobei das vordere Ende seines Spannteils 17 das Instrument gegen die Spannfläche der Öffnung 21 drückt und das Instrument damit einspannt. Mit einer kleinen Verzögerung, hervorgerufen durch die Segmentöffnung 22 an der Exzenterscheibe 12, wird der Positionierbolzen 14 zurückgezogen, wodurch das Dentalinstrument in jeder gewünschten Stellung ohne Behinderung bearbeitbar ist.

Die Spannfläche der Spannöffnung kann bei der Spannzange gemäss den Figuren 5 und 6 beispielsweise eine konische Einbuchtung haben, während der Druckbolzen ein abgerundetes Ende aufweist, so dass damit eine Dreipunktauflage des Instrumentenschaftes erzielt werden kann.

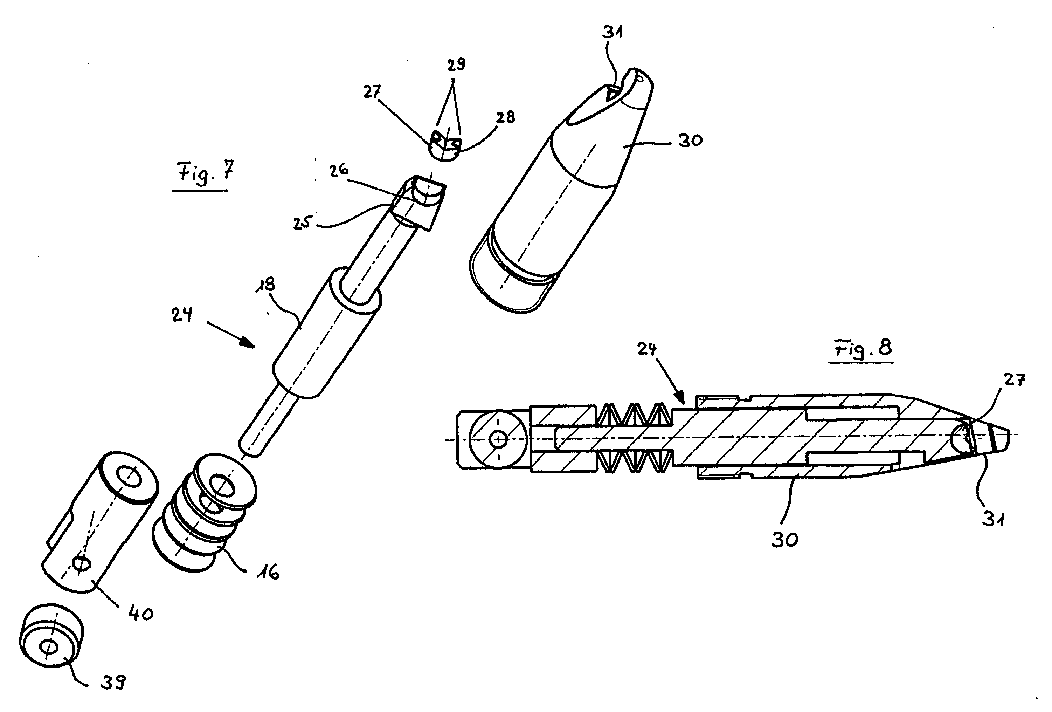

Um die erstrebte Dreipunktauflage besser zu gewährleisten, ist in den Figuren 7 und 8 eine Ausführungsvariante beschrieben, die am vorderen Ende des Druckbolzens 24 einen Kopf 25 mit einer halbkreisförmigen Ausnehmung 26 aufweist, in der eine Wippe 27 angeordnet ist, die eine halbkreisförmige Rückseite 28 aufweist, die in der halbkreisförmigen Ausnehmung 26 beweglich angeordnet ist und zwei Spannecken 29 enthält, die geeignet sind, den Schaft des Instrumentes im Zusammenwirken mit der Spannfläche festzuklemmen. Der Druckbolzen 24 läuft mit den vorhergehend beschriebenen Federn und Druckhülse im Spanngehäuse 30, das am vorderen Ende das Spannzangenteil 31 mit der Spannfläche aufweist, die mit dem Druckbolzen zusammenwirkt. In Figur 8 sind die Teile montiert und im Schnitt dargestellt. Dadurch, dass die Wippe frei beweglich im Kopf des Druckbolzens angeordnet ist, wird stets eine exakte und feste Halterung des Instrumentes gewährleistet.

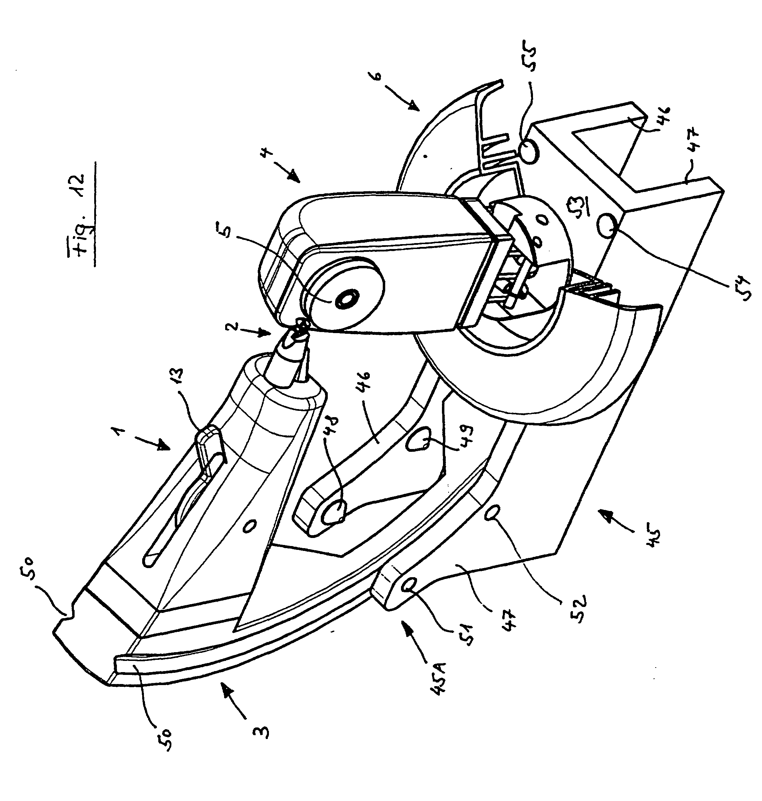

In Figur 10 ist eine weitere Ausführungsvariante dargestellt, wobei die verschiebliche Wippe durch ein federndes Element 32 am Druckbolzen 33 ersetzt ist, während die Spannöffnung 34 am Spanngehäuse 35 im wesentlichen die gleiche ist wie beim vorhergehenden Beispiel. Das federnde Element 32 besteht in vorliegendem Fall aus einem Plättchen 36, das von beiden Seiten her einen Einschnitt 37 aufweist, wodurch sich dieses Plättchen sowohl axial als auch in einem gewissen Umfang transversal bewegen kann, um die beiden Einspannpunkte 38 möglichst gut an das Dentalinstrument anpassen zu können.

In dieser Ausführungsvariante wirkt die exzentrische Spannorganscheibe 12 nicht auf eine Druckhülse, sondern auf ein Rad 39, das in einem Lagerteil 40 drehbar befestigt ist und mit dem hinteren Teil 41 des Druckbolzens 33 verbunden ist. Der Druckbolzen ist mit denselben Federn beaufschlagt wie bei den vorhergehenden Beispielen und ist in Figur 10 im Schnitt und im eingebauten Zustand dargestellt.

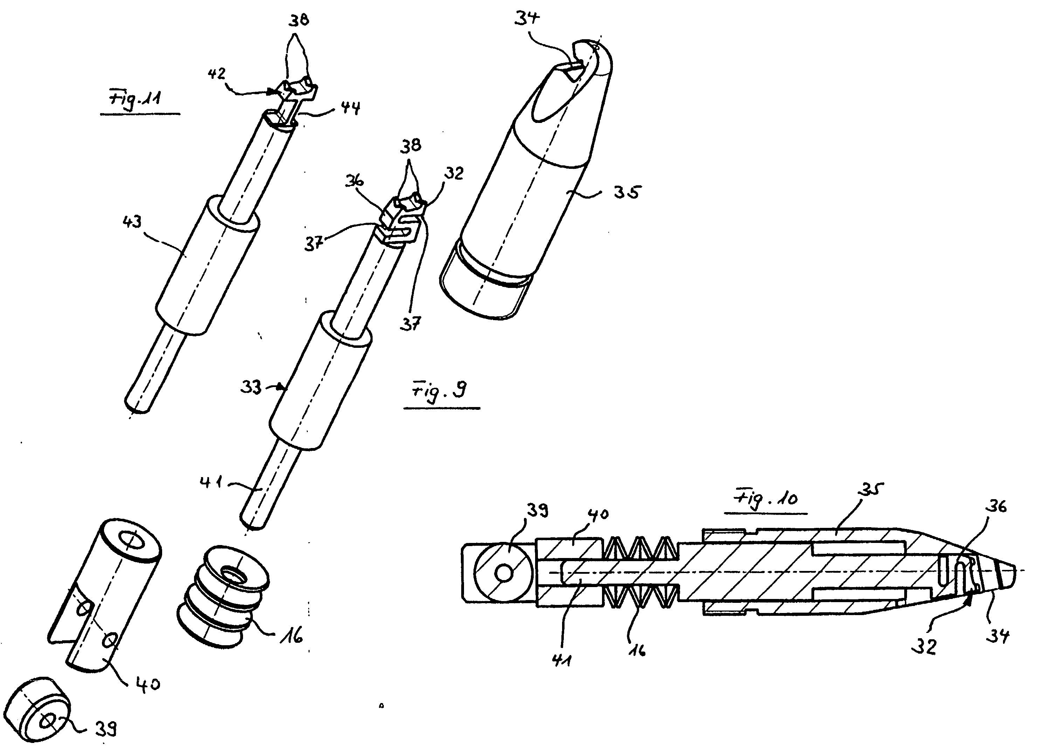

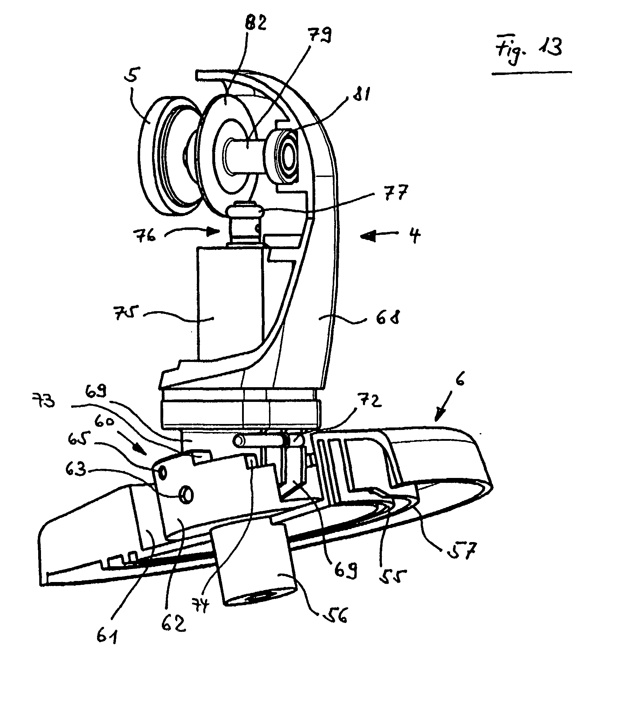

Figur 11 zeigt eine Ausführungsvariante zu Figur 9, wobei der Kopf 42 des Druckbolzens 43 ein in der Längsachse verlaufendes Plättchen 44 aufweist, das derart nachgiebig ist, dass die beiden Spannpunkte 38 sich ebenfalls gut an den Schaft des Dentalinstrumentes anschmiegen können, um auch so seine sichere Halterung zu gewährleisten. Die übrigen Teile und die Einbauweise entsprechen dem vorhergehenden Beispiel gemäss den Figuren 9 und 10.

Aus den Figuren 5, 6, 8 und 10 ist klar ersichtlich, dass die Achse der Spannöffnung, bzw. Spannfläche, nicht senkrecht zur Längsachse des Spannkopfes angeordnet ist, sondern einen Winkel von etwa 80° dazu einschliesst.

Insbesondere in Figur 12 ist dargestellt, wie die Spannkopfhalterung 3 befestigt ist. Diese ist in einem Sockel 45 geführt, der einen U-förmigen Querschnitt aufweist. An dem Ende 45A, an dem die Halterung 3 geführt ist, ist der Sockel hochgezogen. Durch das Verschwenken der Spannkopfhalterung kann die Lage der Spannzange, bzw. des Instrumentes, verstellt werden, um den Anordnungen und Gestaltungen der zu schärfenden Fläche der unterschiedlichsten Instrumente Rechnung zu tragen.

An der Innenfläche der beiden Schenkel 46 und 47 des Sockels sind Führungsstifte 48 und 49 angebracht. Dabei befinden sich die oberen Führungsstifte 48 nahe den Enden der Schenkel und die zweiten Führungsstifte 49 unterhalb der ersten Führungsstifte. Die Führungsstifte verjüngen sich nach aussen und greifen paarweise je in eine Führungsnut 50, die sich ebenfalls nach innen verjüngt und sich entlang der halbkreisförmigen Spannkopfhalterung 3 erstreckt, wie dies insbesondere aus Figur 12 hervorgeht.

Durch das Höherziehen des Sockelendes mit den Führungsstiften und die Anordnung der Führungsstifte ist es möglich, die Spannzangenhalterung den vollen Bereich von +30° nach oben und -45° nach unten, von der Horizontalen ausgehend, zu verschwenken, ohne dass das freie Ende der Halterung aus dem Drehteller hervorragt. Die Halterung sollte möglichst spielfrei geführt und gehalten werden. Dies kann beispielsweise dadurch bewirkt werden, dass die Führungsstifte 51 und 52 fest in einem Schenkel, beispielsweise im Schenkel 47, angeordnet sind und die beiden anderen Führungsstifte 48 und 49 federbeaufschlagt sind.

Ausserdem ist es zweckmässig, die Spannzangenhalterung in bestimmten Stellungen, z. B. horizontal, +30° und -45° zu arretieren. Dies kann beispielsweise dadurch geschehen, dass in einer der Führungsnuten an den entsprechenden Stellungen Vertiefungen vorgesehen sind und einer der beiden federbeaufschlagten Führungsstifte, beispielsweise Stift 48, in diesen Vertiefungen einrasten kann. Dazu muss der andere Führungsstift der gleichen Seite, beispielsweise Führungsstift 49, eine Spitze aufweisen, die nicht in die Vertiefungen einrasten kann, demnach beispielsweise als Keil ausgebildet sein, der in der Führungsnut läuft. Es ist aber auch möglich, einen dritten Stift, einen Einraststift, zu verwenden, der in die Vertiefungen in den jeweiligen Stellungen einrastet, die anderen Stifte jedoch nicht. Selbstverständlich können auch andere Einraststellungen vorgesehen sein.

Es ist auch möglich, anstatt der Führung mittels Führungsstifte in Führungsnuten andere Lagerungs- und Führungsmöglichkeiten der Spannkopfhalterung vorzusehen, beispielsweise indem oberhalb und unterhalb des Bogens der Halterung Lagerstellen vorgesehen werden, von denen beispielsweise die unteren Lagerstellen federbeaufschlagt sind.

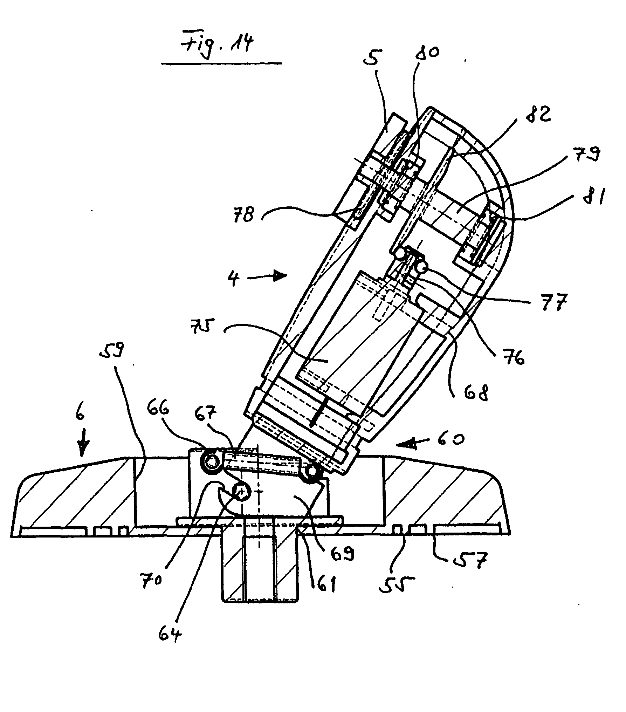

Aus Figur 12 ist ferner ersichtlich, wie der Drehteller 6, an dem der Schleifkopf 4 mit der Schleifscheibe 5 angeordnet ist, auf dem Sockel 45 drehbar befestigt ist. Auf der Oberfläche 53 des Sockels 45 sind vier Lagerungsstopfen 54 angeordnet, dessen Oberflächen mit einem besonders gleitfähigen Material beschichtet sind. Wie ebenfalls aus Figur 12 hervorgeht, läuft der Drehteller über eine Rippe 55 auf diesen Lagerungsstopfen. Der Drehteller 6 weist ferner einen Zapfen 56 auf, wie dies in Figur 13 dargestellt ist, wobei dieser Zapfen in einer nicht eingezeichneten Lagerbüchse läuft, die von unten in einer entsprechenden Öffnung im Sockels befestigt ist und als radiale Lagerung des Drehtellers dient.

Aus Figur 13 ist ferner ersichtlich, dass sich der Gleitrippe 55 nach aussen eine weitere Rippe 57 anschliesst, die nicht über den ganzen Umfang die gleiche Höhe aufweist und dadurch beim Drehen des Drehtellers einen Mikrosschalter 58, siehe Fig. 4, betätigt, um die Drehrichtung der Schleifscheibe in bestimmten Stellungen des Drehtellers umzukehren. Ferner weist der Drehteller an seiner Oberfläche eine Handauflage 83 auf, siehe Fig. 1.

In den Figuren 13 bis 15 wird einerseits die Lagerung des Schleifkopfes und andererseits der Antrieb der Schleifscheibe näher erläutert. Im Drehteller 6, in einer zentralen Ausnehmung 59, ist die Schleifkopflagerung 60 angeordnet. Die Schleifkopflagerung 60, die einstückig mit dem Zapfen 56 ausgebildet ist, ist im Zentrum des Drehtellers in einer Öffnung 61 desselben befestigt und weist zwei Lagerwände 62 auf, in denen je zwei Öffnungen vorgesehen sind, wobei die unteren Öffnungen 63 zur Aufnahme der Achse 64 vorgesehen sind, die als Schwenkachse des Schleifkopfes dient. Die oberen Öffnungen 65 dienen der Aufnahme eines Stiftes 66, an dem eine Zugfeder 67 befestigt ist.

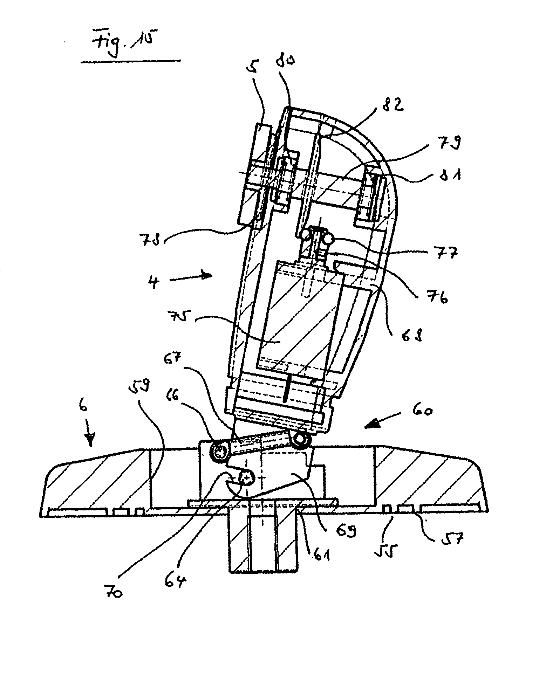

Der Schleifkopf 4 weist ein Schleifkopfgehäuse 68 auf, in dem oben die Schleifscheibe 5 und im Inneren der Schleifscheibenantrieb angeordnet sind. Das Schleifkopfgehäuse 68 besitzt an seinem unteren Ende zwei Lagerungsteile 69, deren Ebene parallel zur SchleifscheibenAchse ausgerichtet sind und schleifscheibenseitig je eine Ausnehmung 70 aufweisen, um die Schwenkachse 64 zu hintergreifen, wie dies aus den Figuren 14 und 15 hervorgeht. Nahe beim Schleifkopfgehäuse befindet sich in den beiden Lagerteilen 69 je eine zweite Ausnehmung 71, die der Aufnahme eines Stiftes 72 dienen, an dem die Zugfeder 67 befestigt ist. Durch die Dimensionierung der Zugfeder ist es möglich, den gewünschten und konstanten Schleifdruck an der Schleifscheibe herzustellen und aufrechtzuerhalten.

In Figur 13 ist ersichtlich, dass die Lagerwände 62 an der der Schleifscheibe entgegengesetzten Seite zwei Stufen 73 und 74 aufweisen, in die jeweils der Zugfederstift 72 einrastbar ist, wobei der Stift in der Ruhestellung in der unteren Stufe 74 einrastet, siehe Figur 14 und in der Arbeitsstellung in der oberen Stufe 73, siehe Figur 15. In dieser Arbeitsstellung ist die Ebene der Schleifscheiben-Oberfläche 5A etwa 15° bezüglich der Mittelsenkrechten M geneigt.

In den Figuren 13 bis 15 ist ferner der Antrieb der Schleifscheibe dargestellt. Dabei wird vorzugsweise ein Reibradantrieb verwendet, der sehr einfach aufgebaut ist und einen vergleichsweise leisen Betrieb ermöglicht. Der elektrische Motor 75 weist an seiner Abgangswelle ein Reibrad 76 auf, das beispielsweise mit einem gummielastischen Ring oder einem O-Ring 77 ausgerüstet ist. Die Schleifscheibenhalterung 78 weist eine Achse 79 auf, die an zwei Stellen 80 und 81 im Schleifkopfgehäuse senkrecht zu dessen Längsachse und etwa senkrecht zur Abgangswelle des elektrischen Motors gelagert ist. Auf der Achse 79 ist eine Reibscheibe 82 befestigt, die mit dem Reibrad 76 zusammenarbeitet. Die gewünschte Umdrehungsgeschwindigkeit der Schleifscheibe wird durch die Drehzahl des elektrischen Motors und dem Über- bzw. Untersetzungsverhältnis des Reibrades zu der Reibscheibe bestimmt.

Die Befestigung der Schleifscheibe auf der Schleifscheiben-Halterung kann auf verschiedene Weise bewerkstelligt werden. Anstatt die Verwendung eines Reibrades und einer Reibscheibe ist es auch möglich, ein Winkelgetriebe zu verwenden, wobei auf der Abgangswelle des elektrischen Motors ein Winkelgetriebe angeordnet ist, das auf ein Winkelgetriebe an der Schleifscheibenachse wirkt, wobei beispielsweise ein 90°-Getriebe verwendet werden kann.

Ausserdem ist es möglich, anstatt der beschriebenen Aufhängung des Schleifkopfes eine Drehachse vorzusehen, an der der Drehteller dreht und an dem eine parallel zur Handauflage verlaufende Schwenkachse angeordnet ist, sowie eine Zugfeder, die einerseits am Drehteller und andererseits am Schleifkopf angeordnet ist, um diesen in einer bestimmte Winkelstellung zu halten.

## Patentansprüche

1. Vorrichtung zum Bearbeiten von Dental- oder chirurgischen Instrumenten, mit einer Halterung (3) zur Lagenverstellung der das zu bearbeitende Instrument (7) haltenden Spannzange (1) und einer Schleifkopflagerung (60), die Mittel aufweist, um die Schleifscheiben-Oberfläche (5A) an die zu bearbeitende Fläche des Instrumentes zu führen und die um ihre senkrechte Achse drehbar ist sowie einen Sockel (45), der beide Halterungen (3, 60) trägt, aufweist, **dadurch gekennzeichnet, dass** die Spannkopf-Halterung (3) ein bogenförmiges Teil ist, das im Sockel (45) geführt ist, wobei der die Spannzange (1) enthaltende Spannkopf (2) radial an einem Ende der Spannkopfhalterung (3) befestigt und beim Schwenken der Halterung in der Lage verstellbar ist.

2. Vorrichtung nach Anspruch 1, **dadurch gekennzeichnet, dass** die Schleifkopflagerung (60) auf einem um die Mittelsenkrechten (M) drehbaren Drehteller (6) schwenkbar angeordnet ist, wobei der Drehteller (6) eine Schwenkachse (64) enthält, die parallel zur Sockeloberfläche (53) angeordnet ist und an der der Schleifkopf (4) angelenkt ist, der unter der Spannung einer Zugfeder (67) steht derart, dass die unter einem Winkel bezüglich der Mittelsenkrechten (M) angeordnete Schleifscheiben-Oberfläche (5A) an die zu bearbeitende Fläche des Instrumentes gedrückt wird.

3. Vorrichtung nach Anspruch 1 oder 2, **dadurch gekennzeichnet, dass** die Führung der Spannkopfhalterung (3) zwei Paare von Führungsstifte (48, 49; 51, 52) enthält, die je an der Innenseite der Schenkel (46, 47) des U-förmig ausgebildeten Sockels (45) angeordnet sind und in je eine Führungsnut (50) in den Seiten der Halterung greifen.

4. Vorrichtung nach Anspruch 3, **dadurch gekennzeichnet, dass** je ein Führungsstift (48, 51) nahe beim Ende (45A) der hochgezogenen Schenkel (46, 47) des Sockels (45) und je ein Führungsstift (49, 52) unterhalb angeordnet sind, wobei sich die Führungsstifte gegen aussen hin verjüngen und die Führungsnuten (50) sich nach innen ebenfalls verjüngen.

5. Vorrichtung nach Anspruch 3 oder 4, **dadurch gekennzeichnet, dass** ein Paar Führungsstifte (51, 52) fest in einem Schenkel (47) angeordnet und das andere Paar (48, 49) im anderen Schenkel (46) federbeaufschlagt ist.

6. Vorrichtung nach einem der Ansprüche 1 bis 5, **dadurch gekennzeichnet, dass** die Schleifkopflagerung (60) im Drehteller (6) zwei entgegengesetzt angeordnete Lagerwände (62) enthält, die je eine Öffnung (63) zur Aufnahme der Schwenkachse (64) und eine Öffnung (65) zur Aufnahme eines Stiftes (66) für die Zugfeder (67) sowie zwei Stufen (73, 74) zum Einhängen des anderen Stiftes (72) an der Zugfeder in einer Arbeits- und in einer Ruhestellung aufweisen, wobei der Schleifkopf (4) an der Schwenkachse (64) eingehängt ist.

7. Vorrichtung nach einem der Ansprüche 1 bis 6, **dadurch gekennzeichnet, dass** ein elektrische Motor (75) für den Antrieb der Schleifscheibe (5) im Schleifkopfgehäuse (68) angeordnet und über ein Winkelgetriebe (76, 82) mit der Schleifscheiben-Welle (79) verbunden ist.

8. Vorrichtung nach Anspruch 7, **dadurch gekennzeichnet, dass** der elektrische Motor (75) in der Längsachse des Schleifkopfes (4) und die Schleifscheibenwelle (79) senkrecht dazu angeordnet sind.

9. Vorrichtung nach Anspruch 7 oder 8, **dadurch gekennzeichnet, dass** das Winkelgetriebe ein Reibantrieb (76, 77; 82) oder ein Zahnradgetriebe ist.

10. Vorrichtung nach einem der Ansprüche 1 bis 9, **dadurch gekennzeichnet, dass** der U-förmige Sockel (45) an seiner Oberfläche (53) Gleitstopfen (54) aufweist und an der Unterseite des Drehtellers an der entsprechenden Stelle eine umlaufende Gleitrippe (55) ausgebildet ist.

11. Vorrichtung nach einem der Ansprüche 1 bis 10, mit einem Spanngehäuse (20), in dem ein durch ein exzentrisches Spannorgan (12) betätigbarer Druckbolzen (15) angeordnet ist, der auf den Schaft (8) des Instrumentes wirkt, um diesen gegen die Spannfläche einer im Spanngehäuse angeordneten, durchgehenden Spannöffnung (21) zu drücken und das Instrument (7) fest in einer bestimmten Position einzuspannen.

12. Vorrichtung nach Anspruch 11, **dadurch gekennzeichnet, dass** der Druckbolzen (15, 24, 32, 43) einen Druckkopf (25, 33, 42) aufweist, der mit einem beweglichen Element (27, 36, 44) versehen ist, um sich an den Schaft des Instrumentes anzuschmiegen.

13. Vorrichtung nach Anspruch 11 oder 12, **dadurch gekennzeichnet, dass** unterhalb des Druckbolzens ein verschiebbarer Positionierbolzen (14) angeordnet ist, um beim Einspannen als Auflagefläche für das einzuspannende Instrument zu dienen.

14. Vorrichtung nach einem der Ansprüche 11 bis 13, **dadurch gekennzeichnet, dass** der Druckbolzen (15) in seiner Mitte ein Abstützteil (18) aufweist und Spannorganseitig auf dem Druckbolzen (15) eine Druckhülse (11) mit anschliessenden Tellerfedern (16) und spannöffnungsseitig eine Druckfeder (19) aufgesetzt sind.

15. Vorrichtung nach einem der Ansprüche 11 bis 14, **dadurch gekennzeichnet, dass** im Druckkopf (25) eine schwenkbare Spannwippe (27) angeordnet ist, um sich dem Schaft des Instrumentes anzuschmiegen.

16. Vorrichtung nach einem der Ansprüche 11 bis 15, **dadurch gekennzeichnet, dass** das bewegliche Element ein eingefrästes oder biegsames Plättchen (36, 44) ist.

## Claims

1. Device for the treatment of dental or surgical instruments, comprising a support (3) for adjusting the position of the chuck (1) retaining the instrument (7) to be treated, and a grinding head support (60) which is provided with means for guiding the grinding wheel surface (5A) towards the surface to be treated of the instrument and which is rotatable about its vertical axis, as well as a base (45) carrying the two supports, **characterised in that** the chuck head support (3) is an arcuate part that is guided in the base (45), the chuck head (2) containing the chuck (1) being radially fastened to one end of the chuck head support (3) and its position being adjustable through the displacement of the support.

2. Device according to claim 1, **characterised in that** the grinding head support (60) is pivotally disposed on a rotary table (6) that is rotatable around the mid-perpendicular (M), the rotary table (6) comprising a pivot (64) that extends in parallel to the surface (53) of the base and on which the grinding head (4) is hinged, the latter being under the action of a tension spring (67) such that the grinding head surface (5A), which is disposed at an angle with respect to the mid-perpendicular (M), is pressed against the surface to be treated of the instrument.

3. Device according to claim 1 or 2, **characterised in that** the guiding means of the chuck head support (3) comprise two pairs of guiding pins (48, 49; 51, 52) that are disposed on the inner sides of each shank (46, 47) of the U-shaped base (45) and which engage in respective guiding grooves (50) in the sides of the support.

4. Device according to claim 3, **characterised in that** a respective guiding pin (48, 51) is disposed near the end (45A) of each raised shank (46, 47) of the base (45) and a respective guiding pin (49, 52) is disposed therebelow, the guiding pins tapering outwardly and the guiding grooves (50) also tapering inwardly.

5. Device according to claim 3 or 4, **characterised in that** one pair of guiding pins (51, 52) is fixedly mounted in one (47) of the shanks while the other pair (48, 49) is spring-loaded in the other shank (46).

6. Device according to one of claims 1 to 5, **characterised in that** the grinding head support (60) in the rotary table (6) includes two opposed support walls (62), each comprising a respective opening (63) intended to receive the pivot (64) and an opening (65) intended to receive a pin (66) for the tension spring (67) as well as two steps (73, 74) for attaching the other pin (72) secured to the tension spring in a working and in a rest position, respectively, the grinding head (4) being attached to the pivot (64).

7. Device according to one of claims 1 to 6, **characterised in that** an electric motor (75) for driving the grinding wheel (5) is disposed in the grinding head casing (68) and connected to the grinding wheel shaft (79) by an angular gear (76, 82).

8. Device according to claim 7, **characterised in that** the electric motor (75) is disposed in the longitudinal axis of the grinding head (4) and the grinding wheel shaft (79) perpendicularly thereto.

9. Device according to claim 7 or 8, **characterised in that** the angular gear is a wheel and disk drive (76, 77; 82) or a gearwheel drive.

10. Device according to one of claims 1 to 9, **characterised in that** the U-shaped base (45) is provided with gliding plugs (54) on its surface (53) and a circular gliding rib (55) is formed at the corresponding location on the underside of the rotary table.

11. Device according to one of claims 1 to 10, comprising a chuck housing (20) in which a thrust bolt (15) is arranged that is actuatable by an eccentric tensioning member (12) and acts upon the shank (8) of the instrument in order to press the latter against the clamping surface of a throughgoing chuck opening (21) arranged in the chuck housing and to firmly chuck the instrument (7) in a determined position.

12. Device according to claim 11, **characterised in that** the thrust bolt (15, 24, 32, 43) comprises a thrust head (25, 33, 42) provided with a movable element (27, 36, 44) for adapting to the shank of the instrument.

13. Device according to claim 11 or 12, **characterised in that** a displaceable positioning bar (14) is disposed underneath the thrust bolt to serve as a rest for the instrument to be chucked.

14. Device according to one of claims 11 to 13, **characterised in that** the thrust bolt (15) comprises a supporting portion (18) at its center, and a thrust sleeve (11) with following disk springs (16) is slipped over the thrust bolt (15) on the side of the tensioning member and a pressure spring (19) on the side of the chuck opening.

15. Device according to one of claims 11 to 14, **characterised in that** a pivotable clamping rocker (27) is disposed in the chuck head (25) to adapt to the shank of the instrument.

16. Device according to one of claims 11 to 15, **characterised in that** the movable member is a small plate with milled incisions or elastic plate (36, 44).

## Revendications

1. Dispositif pour le traitement d'instruments dentaires ou chirurgicaux, comprenant un support (3) pour l'ajustement de la position de la pince de serrage (1) qui retient l'instrument (7) à traiter, et un support (60) de la tête d'affûtage qui comporte des moyens pour amener la surface (5A) du disque abrasif contre la surface à traiter de l'instrument et qui est orientable autour de son axe vertical, ainsi qu'un socle (45) qui porte les deux supports (3, 60), **caractérisé en ce que** le support (3) de la tête de serrage est un élément en forme d'arc qui est guidé dans le socle (45), la tête de serrage (2) avec la pince de serrage (1) étant fixée radialement à l'une des extrémités du support (3) de la tête de serrage, et sa position étant ajustable en orientant ledit support.

2. Dispositif selon la revendication 1, **caractérisé en ce que** le support (60) de la tête d'affûtage est fixé de manière orientable sur un plateau tournant (6) rotatif autour de la médiane verticale (M), ledit plateau tournant (6) comprenant un pivot (64) parallèle à la surface du socle (53) sur lequel est articulée la tête d'affûtage (4), laquelle est soumise à la tension d'un ressort de tension (67) de telle manière que la surface (5A) du disque abrasif, disposée à un angle par rapport à la médiane verticale, est pressée contre la surface à traiter de l'instrument.

3. Dispositif selon la revendication 1 ou 2, **caractérisé en ce que** le guidage du support (3) de la tête de serrage comprend deux paires de tenons de guidage (48, 49; 51, 52) qui sont montés chaque fois sur le côté intérieur des traverses (46, 47) du socle (45) en U et rentrent dans une rainure de guidage (50) respective dans les côtés dudit support.

4. Dispositif selon la revendication 3, **caractérisé en ce que** l'un des tenons de guidage (48, 51) est chaque fois disposé près de l'extrémité (45A) des traverses (46, 47) relevés du socle (45), et l'un des tenons de guidage (49, 52) est disposé en dessous du premier, les tenons de guidage étant effilés vers l'extérieur et les rainures de guidage (50) étant également effilées, vers l'intérieur.

5. Dispositif selon la revendication 3 ou 4, **caractérisé en ce qu'**une paire de tenons de guidage (51, 52) est montée de manière fixe dans l'un des traverses (47) et l'autre paire (48, 49) est sous l'action de ressorts dans l'autre traverse (46).

6. Dispositif selon l'une des revendications 1 à 5, **caractérisé en ce que** le support (60) de la tête d'affûtage dans le plateau tournant (6) comprend deux parois de support (62) opposées, présentant chaque fois une ouverture (63) destinée à loger le pivot (64) et une ouverture (65) destinée à loger une broche (66) pour le ressort de traction (67) ainsi que deux gradins (73, 74) pour accrocher l'autre broche (72) fixée audit ressort de traction dans une position de travail et une position de repos, la tête d'affûtage (4) étant accrochée audit pivot (64).

7. Dispositif selon l'une des revendications 1 à 6, **caractérisé en ce qu'**un moteur électrique (75) pour l'entraînement du disque abrasif (5) est agencé dans le boîtier (68) de la tête d'affûtage et relié à l'arbre (79) du disque abrasif par un engrènement angulaire (76, 82).

8. Dispositif selon la revendication 7, **caractérisé en ce que** le moteur électrique (75) est disposé dans l'axe longitudinal de la tête d'affûtage (4) et l'arbre (79) du disque abrasif y est perpendiculaire.

9. Dispositif selon la revendication 7 ou 8, **caractérisé en ce que** ledit engrènement angulaire est un entraînement par friction (76, 77; 82) ou un engrenage.

10. Dispositif selon l'une des revendications 1 à 9, **caractérisé en ce que** le socle en U (45) présente à sa surface (53) des bouchons glissants (54), et qu'une nervure de glissement (55) est formée à l'endroit correspondant sur la face inférieure du plateau tournant.

11. Dispositif selon l'une des revendications 1 à 10, comprenant un boîtier de serrage (20) dans lequel est agencé un boulon de pression (15) pouvant être actionné par un organe de serrage (12) excentrique, ledit boulon de pression agissant sur la tige (8) de l'instrument afin de la presser contre la surface de serrage d'une ouverture de serrage (21) traversante dans le boîtier de serrage et de serrer fermement ledit instrument (7) dans une position donnée.

12. Dispositif selon la revendication 11, **caractérisé en ce que** le boulon de pression (15, 24, 32, 43) comprend une tête de pression (25, 33, 42) munie d'un élément mobile (27, 36, 44) afin de s'adapter à la tige de l'instrument.

13. Dispositif selon la revendication 11 ou 12, **caractérisé en ce que** sous le boulon de pression est agencé un boulon de positionnement (14) déplaçable qui sert de surface d'appui pour l'instrument à serrer.

14. Dispositif selon l'une des revendications 11 à 13, **caractérisé en ce que** le boulon de pression (15) présente une partie d'appui (18) au centre et une douille de pression (11) suivie de ressorts à disques (16) est passée sur le boulon de pression (15) du côté de l'organe de serrage et un ressort de pression (19) du côté de l'ouverture de serrage.

15. Dispositif selon l'une des revendications 11 à 14, **caractérisé en ce qu'**une bascule de serrage (27) pivotante est disposée dans la tête de pression (25) afin de s'adapter à la tige de l'instrument.

16. Dispositif selon l'une des revendications 11 à 15, **caractérisé en ce que** l'élément mobile est une plaquette (36, 44) avec des incisions fraisées ou élastique.
